# EUROPEAN PATENT APPLICATION

(11) **EP 3 598 923 A1**
(43) Date of publication of application: **29.01.2020**
(21) Application number: 19188327.1
(22) Date of filing: 25.07.2019
(51) Int. Cl.: A47B 95/04, F16B 12/20, A47B 95/02

(54) **A CROSS PIECE SUBSTANTIALLY FLAT FOR COVERING A PIECE OF FURNITURE AND A PIECE OF FURNITURE COMPRISING SUCH A CROSS PIECE**

(30) Priority: 26.07.2018 IT 201800007530
(71) Applicant: SCILM S.p.A., 35013 Cittadella (Prov. of Padova) (IT)
(72) Inventor: BEGHETTO, Francesco, 35013 Cittadella (Prov. of Padova) (IT)
(74) Representative: Anselmi, Davide

(57) **Abstract**

A frontal covering system of a flat surface (100) of a piece of furniture (101) defined by the thickness of one or more walls (102) of the piece of furniture (101), comprising a cross piece (1) having a front face (2) and a rear face (3) opposite the front face wherein said rear face (3) extends substantially along a rest plane destined to superpose on said flat surface (100) of the piece of furniture (101). Furthermore, the system comprises connection means (4) of the cross piece (1) to the piece of furniture (101) at least in part arranged at the rear face (3) of the cross piece (1) and in a recessed position in the rear face (3) with respect to the rest plane so that, in use, said part of said connection means (4) is arranged outside the flat surface (100) of the piece of furniture (101) according to a direction that goes from the piece of furniture (101) towards the cross piece (1).

## Description

### Field of application

The present invention relates to a frontal covering system of a flat surface of a piece of furniture defined by the thickness of one or more walls of the piece of furniture. In particular, such covering system comprises a substantially flat groove shaped cross piece, in jargon also defined as a flat groove. It is to be noted that the present invention is preferably applied in the furniture sector and, in particular, in kitchen furniture.

Furthermore, the present invention is preferably applied horizontally (e.g. between superposed drawers or doors of a piece of furniture), but it could also be applied vertically.

### State of the art

Currently, in pieces of furniture it is common practice to use doors or shutters or drawers without handles and the movement of which is permitted by the actual structure of the door or leaf.

In particular, many configurations require the user to act by pulling the door or leaf at an upper, lower or side edge thereof, therefore exerting a force on the back surface of the door itself. Such system therefore makes it necessary to have an opening or undercut in the structure of the piece of furniture, so as to leave the necessary space for the positioning of the user's hand.

The opening afforded in the piece of furniture which, for example, could be interposed between the upper wall of the piece of furniture and the leaf of the drawer, therefore needs to be covered, in order to guarantee the closing of the structure of the cupboard or the drawer, and also for aesthetic reasons. For that purpose, groove shaped cross pieces are used, which define a concavity adapted to follow on one side the profile of the undercut of the piece of furniture and on the other that of the space to be left for the movement of the door.

The cross piece is usually constrained to the piece of furniture from the inside, through a support fixed to a side wall of the piece of furniture and in proximity of the undercut. An example of such system is described in patent IT201600103879 in the name of the same Applicant.

Such known technique has some drawbacks substantially connected with the fact that the structure of the piece of furniture, e.g. the vertical walls, must be processed in order to have said undercut. In particular, such joinery process provides for a front milling to be performed for every panel with respect to an imaginary front surface of the piece of furniture resting on the walls at the thickness of the latter.

Such drawback is even more accentuated if it is considered that the milling for the undercut must be afforded at the exact point where the cross piece will be installed which can vary according to the type of module of the piece of furniture that the end client wishes to create.

### Objects of the present invention

The object of the present invention is to develop a frontal covering system of the piece of furniture and a piece of furniture provided with such covering system that solves the drawbacks mentioned above.

In particular, it is an object of the present invention to develop a frontal covering system of the piece of furniture and a piece of furniture that allows any processing of the piece of furniture or parts thereof to be reduced or prevented.

Furthermore, it is an object of the present invention to develop a frontal covering system of the piece of furniture and a piece of furniture that allows greater installation flexibility of the cross pieces also following the steps of creating the walls of the piece of furniture.

### Brief description of the figures

Further characteristics and advantages of the present invention will become more apparent from the indicative and thus non-limiting description of an embodiment of a frontal covering system of the piece of furniture and a piece of furniture provided with said covering system.

This description will be set out below with reference to the appended drawings, which are provided solely for indicative and therefore non-limiting purposes, in which:

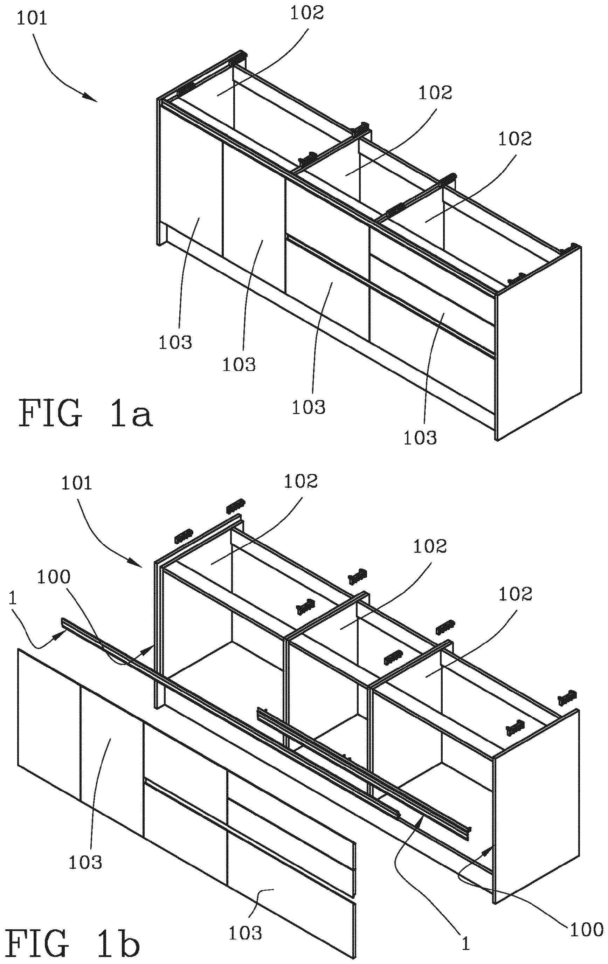

- figure 1a is a perspective view of a piece of furniture comprising the frontal covering system according to the present invention;
- figure 1b is an exploded perspective view of the piece of furniture of figure 1a;

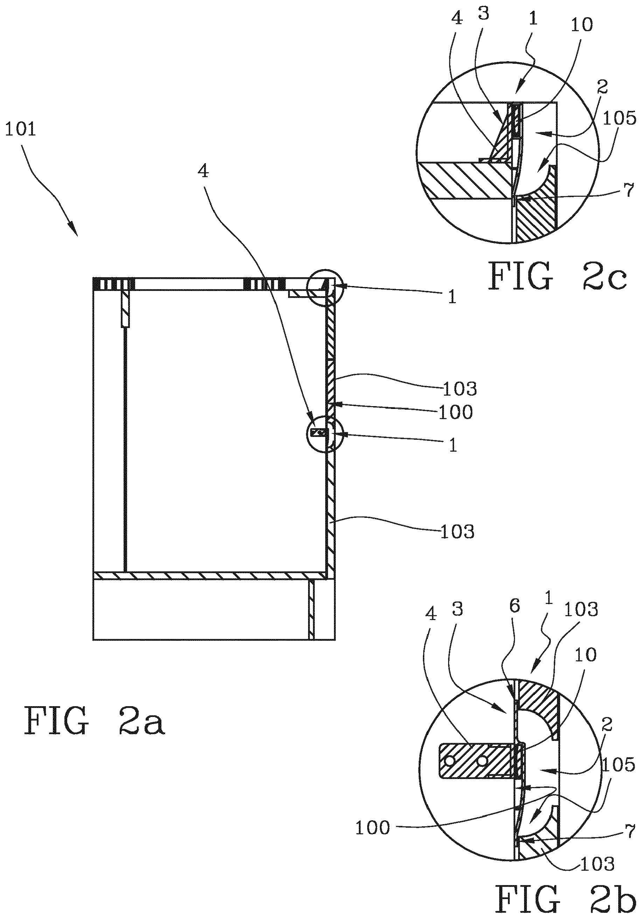

- figure 2a is a sectional view of the piece of furniture of figure 1 a;
- figure 2b is a sectional view of a detail of the piece of furniture of figure 2a;
- figure 2c is a sectional view of a further detail of the piece of furniture of figure 2a;
- figure 3a is an enlarged sectional view of a first detail of the piece of furniture of figure 2a;
- figure 3b is an enlarged sectional view of the first detail of figure 3a with some parts removed to better highlight others;
- figure 3c is an enlarged sectional view of an alternative embodiment of the first detail of the piece of furniture of figure 3a;
- figure 4a is an enlarged sectional view of a second detail of the piece of furniture of figure 2;
- figure 4b is an enlarged sectional view of the second detail of figure 4a with some parts removed to better highlight others;
- figures 5a and 5b show a lateral or sectional view of two embodiments of the cross piece of figure 4b;
- figures 6a and 6b show an axonometric view of some examples of installation of connection means of the cross piece.

### Description of the preferred embodiment of the invention

With reference to the appended figures, the frontal covering system of a flat surface 100 of a piece of furniture 101 is represented wherein the term "flat surface 100" means the surface defined by the thickness of one or more walls 102 of the piece of furniture 101, or the imaginary surface that rests on such side of the thickness of the walls 102 of the piece of furniture 101.

It is also to be noted that the piece of furniture 101 does not have an undercut or recess, and therefore the frontal surface is planar (or flat). The covering system is defined as frontal (or lateral), as it is placed on the part of a piece of furniture 101 facing towards the user that uses it.

In particular, the covering system comprises a cross piece 1 extending mainly according to its own longitudinal extension direction so as to superpose, in use, said flat surface 100 of the piece of furniture 101. In particular, the cross piece 1 superposes the walls 102 of the piece of furniture 101 mentioned above and is fixed to the piece of furniture 101 itself. Once the installation is performed, such cross piece 1 can be oriented horizontally (in that case it is superposed with the vertical walls 102 of the piece of furniture 101) or vertically (in that case it is superposed with the horizontal walls 102 of the piece of furniture 101).

Such cross piece 1 has a front face 2 and a rear face 3 opposite the front one.

The rear face 3 substantially extends along a rest plane intended to superpose said flat surface 100 of the piece of furniture 101. In particular, such rear face 3 has at least a part of connection means 4 of the cross piece 1 to the piece of furniture 101. In fact, such connection means 4 comprises at least two parts, the first connected to the rear face 3 of the cross piece 1, while the second is connected to the piece of furniture 101. The two parts can be connected to each other.

According to the present invention, the part of said connection means 4 arranged at the rear face 3 of the cross piece 1 is arranged in a recessed position in the rear face 3 with respect to the rest plane so that, in use, said part of said connection means 4 is arranged outside the flat surface 100 of the piece of furniture 101 according to a direction that goes from the piece of furniture 101 towards the cross piece 1.

Specifically, such part of said connection means 4 arranged at the rear face 3 of the cross piece 1 comprises a longitudinal seat 5 extending along said longitudinal extension direction.

Therefore, such longitudinal seat 5 is arranged in a hollowed, or aligned position with respect to the rest plane so that by resting the cross piece 1 on the flat surface 100 of the front of the piece of furniture 101 the seat 5 and the cross piece 1 are external with respect to the piece of furniture 101 itself so as to define a sort of "external flat groove".

It is to be noted that the cross piece 1 has a section profile, according to a direction orthogonal to the longitudinal extension direction of the cross piece 1, defining a recess at the rear face 3 in which said part of connection means 4 is arranged. It is to be noted that the term "recess" identifies a recessed space with respect to the cross piece 1 itself, but that in actual fact "projects" with respect to the flat surface 100 of the piece of furniture 101. In fact, such recess is arranged outside the flat surface 100 of the piece of furniture 101 so as to define said "external flat groove".

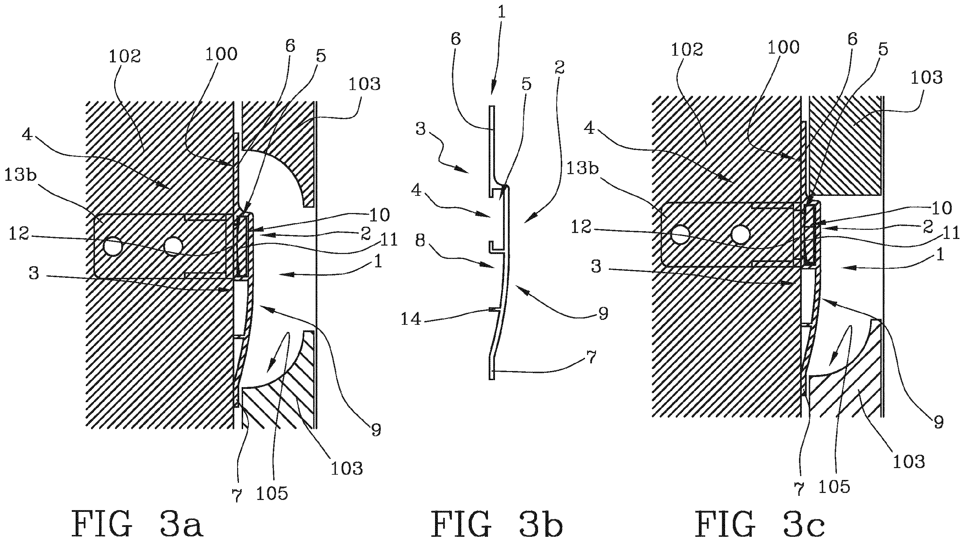

In particular, said section profile has two edge portions 6, 7 between which said recess is arranged, wherein said edge portions 6, 7 define a flat portion of the rear face 3. In other words, the rear face 3 extends along a lying plane of one or more flat edge portions 6, 7 which, in use, rests on the flat frontal surface 100 of the piece of furniture 101. In yet other words, the two edge portions 6, 7 lie on a same lying plane. On this point, observing figures 3a, 3b, 3c it is possible to see that the rear face 3 comprises the two edge portions 6, 7 (in the figure an upper one and a lower one) defined by a flat stretch of profile and between them there is a recess 8 in which the longitudinal seat 5 of the connection means 4 is arranged.

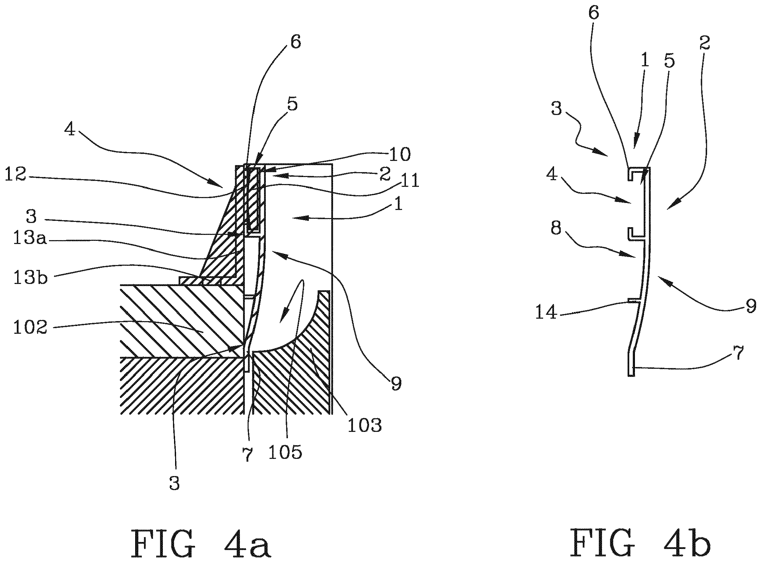

Alternatively, in figures 4a and 4b, which illustrate a cross piece 1, preferably connected to the top or to an outer side of the piece of furniture 101, an embodiment is illustrated in which only a flat edge portion is present (the lower one in the figure) which rests on the flat surface 100 of the piece of furniture 101, whereas the longitudinal seat 5 is arranged in a cantilever fashion towards the outside of the piece of furniture 101. Furthermore, figures 3a, 3b, 3c illustrate an embodiment in which the edge portions 6, 7 are planar (or flat) also at the front face 2 so that a part of door 103 or front of the drawer and the piece of furniture 101 abuts against them. Specifically, in such figures the upper edge portion has a longer flat stretch with respect to the lower end portion so as to allow (as in figure 3c) the resting also of an upper non-hollowed door 103.

In other words, such edge portions 6, 7 define a slight distancing thickness between the door 103 or the front of the drawer and the piece of furniture 101 during the closing position thereof.

In other words, the recess 8 defines a substantially curved shaping 9 on said front face 2. The thickness of said curved shaping 9 with respect to the flat surface 100 of the piece of furniture 101 is about equal to the thickness of the longitudinal section seat 5.

It is to be noted that such curved shaping 9 can be rounded, squared, squared towards an edge portion and rounded with respect to the other edge portion and vice versa.

In general, said section profile has at least one flat edge portion 6, 7 of the front face 2 with respect to the curved shaping 9 considering the lying plane (in use defined by the flat surface 100 of the piece of furniture 101) as a reference. In other words, the curved shaping 9 is more projecting with respect to the edge portion 6, 7 considering the lying plane as a reference. In this way, at the recess 8 (to the rear of the curved shaping 9) there are connection means 4, whereas at at least one of the longitudinal edges the cross piece 1 is flat so that a door or drawer can rest on it with the minimum raised thickness.

For example, in figures 3a, 3b, 3c it is possible to see that such curved shaping 9 is squared at the top and curved at the bottom.

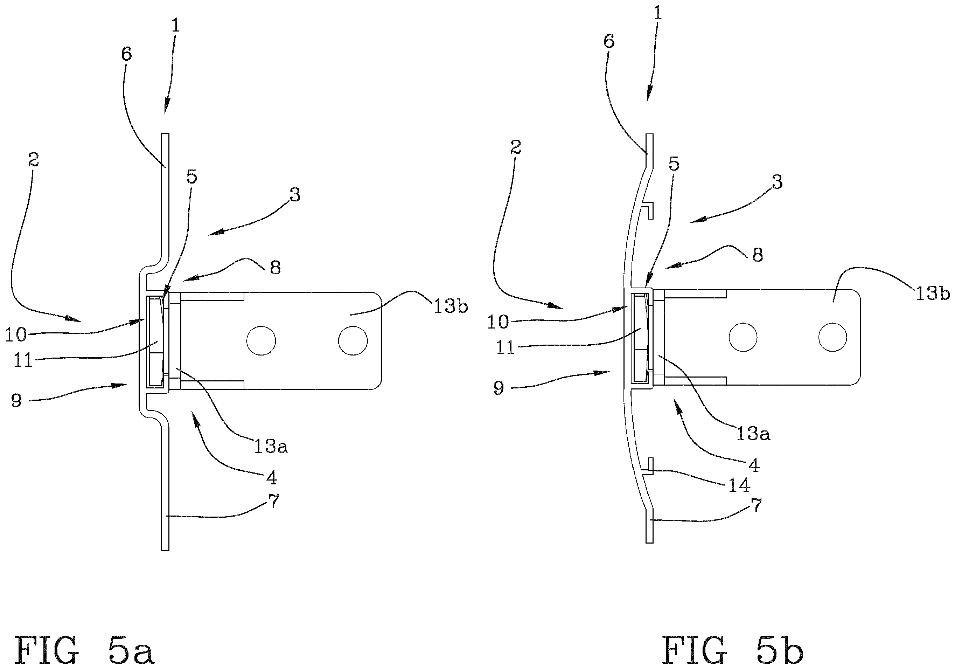

In the embodiment illustrated in figure 5a such curved shaping 9 is square centrally and the upper and lower edge portions are flat. Figure 5b shows a variant embodiment in which such curved shaping 9 is rounded centrally and the upper and lower edge portions are reduced in extension (e.g. with respect to the variant of figure 5a) and flat.

In any case, the front face of the cross piece 1 has an orthogonal extension to the longitudinal extension direction which is essentially planar, therefore in jargon it is also defined as a "flat groove".

It is also to be noted that the rear face 3 of the cross piece 1 comprises a support foot 14 arranged at the recess 8 and extending to the resting plane to define a resting point of the profile on the piece of furniture 1.

It is to be noted that the connection means 4 comprises a sliding element 10 (also defined as a "skid") configured to be inserted into the longitudinal seat 5 and a connecting element 13 configured to be connected to the piece of furniture 101.

In particular, the sliding element 10 comprises a bracket 11 that has a longitudinal extension adapted to allow, in a first operating condition of said sliding element 10, said bracket 11 to enter into said seat 5 or to exit from said seat 5 in a direction orthogonal (and away from the seat 5) to an extension direction of said seat 5, and a transversal extension adapted, in a second operating condition of said skid, to allow the sliding of said bracket 11 into said seat 5 and to prevent the exit of said bracket 11 from said seat 5.

Preferably the bracket 11 is integral with a support 12 that has a dimension and shape such as to allow the passage of said skid from said first to said second operating condition and vice versa, when said bracket 11 is in said seat 5.

In this way the skid can pass from the condition in which it can be inserted into the seat 5 to the one in which it can slide therein and is prevented from exiting therefrom.

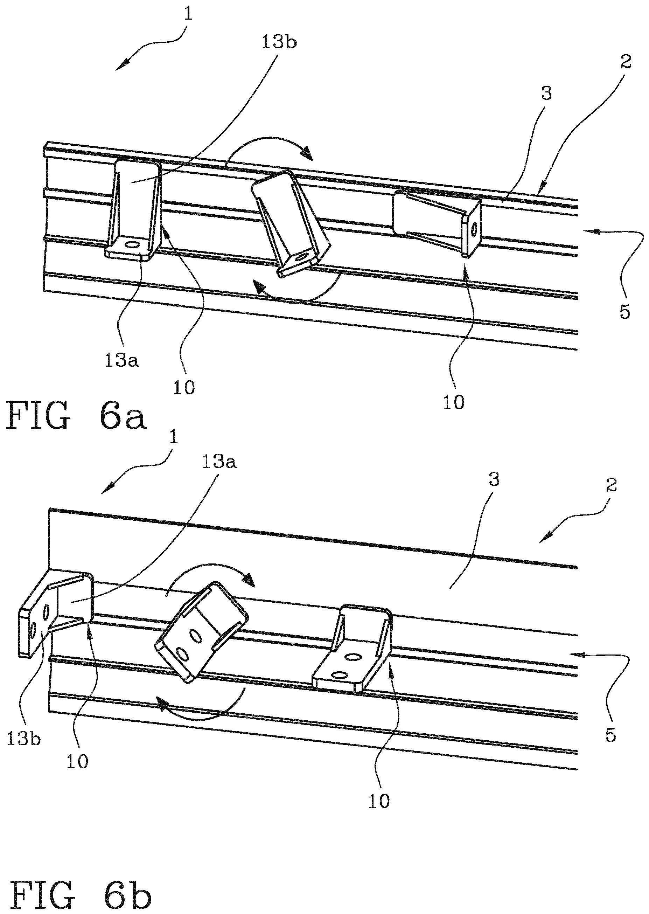

Preferably the passage from the first to the second operating condition and vice versa takes place through a rotation of said bracket 11 in said seat 5 and about an orthogonal axis to the extension direction of said seat 5 (figures 6a and 6b).

Preferably, the support 12 is fixed on one side to said bracket 11 and on the other to the rest of the connecting element 13.

The connecting element 13 is L-shaped and comprises a first portion 13a connected to the sliding element 10 and a second portion 13b directly connectable to a wall 102 of the piece of furniture 101.

It is to be noted that such second portion is preferably fixed to the side of the wall 102 of the piece of furniture 101 through a connection means such as holes and screws.

In the preferred embodiment illustrated for example in figures 6a and 6b said connecting element 13 and said sliding element 10 are made in a single body.

In other words, the second portion of the L-shaped connecting element 13 defines said skid.

An object of the present invention is also a piece of furniture 101 comprising a plurality of walls 102 defining at their front thickness said flat surface 100. The covering system previously described envisages that the cross piece 1 is fixed transversally with respect to the front thickness of the walls 102 at a part of said flat surface 100.

In particular, such walls 102 of the piece of furniture 101 are flat at said flat surface 100 and do not have any undercuts or removals of material.

In particular, the piece of furniture 101 comprises one or more closing doors (or drawer fronts) at least partially superposed on the front face 2 of the cross piece 1. Preferably, one or more doors have at the cross piece 1 a hollow 105 in order to be able to grasp the door 103 in the thickness direction. The cross piece 1, being arranged flush with the flat surface 100 of the piece of furniture 101, allows the insertion of the hand for grasping the door 103.

In other words, the cross piece 1 is arranged between two doors (or drawer fronts) as shown in figure 3a, or between a door 103 and a fixed panel.

Preferably, the door 103 is superposed with the flat edge portion of the front face of the cross piece 1. The curved shaping 9 is instead interposed between two doors or panels.

In the preferred embodiment illustrated in the appended figures, the walls 102 of the piece of furniture 101 are arranged vertically and are spaced out from each other horizontally. In that case, the cross piece 1 extends horizontally through a plurality of said walls 102.

Alternatively, as previously mentioned, the walls 102 of the piece of furniture 101 are arranged horizontally and are distanced from each other vertically, whereas the cross piece 1 extends vertically through a plurality of said walls 102.

Finally, an object of the present invention is a fixing method of a covering system realised according to what is previously described and comprising the following operating steps:
- identifying the fixing position of the cross piece 1 to the piece of furniture 101 according to the configuration of the piece of furniture 101;
- positioning the skid on the rear face 3 of the cross piece 1 in a position corresponding to at least one of the walls 102 of the piece of furniture 101 to which said cross piece 1 is to be fixed;
- resting the cross piece 1 on the flat surface 100 defined by the walls 102 of the piece of furniture 101; and
- fixing the connection means 4 to one or more walls 102 of the piece of furniture 101.

In particular, the method envisages that the cross piece 1 rests freely on the front of the piece of furniture 101 without the need to make any undercuts on the walls 102 of the piece of furniture 101.

Therefore, the fixing step can take place in any position of the flat surface 100 of the piece of furniture 101.

In other words, the step of fixing the connecting means 4 to one or more walls 102 of the piece of furniture 101 takes place where the piece of furniture 101 is installed.

The present invention attains the set objects.

In particular, the present invention allows the operations of realising a piece of furniture 101 to be reduced, in particular preventing the milling operations of the internal walls 102 of the piece of furniture 101 at the grooves. In fact, the present invention allows the cross piece 1 to be freely fixed during the assembly of the kitchen, without realising the millings on the piece of furniture 101 in advance.

Therefore, also the operations of realising the kitchen can be standardised without considering the specific design and, in detail, the specific position of the grooves.

## Claims

1. A frontal covering system of a flat surface (100) of a piece of furniture (101) defined by the thickness of one or more walls (102) of the piece of furniture (101), comprising:
- a cross-member (1) extending according to its longitudinal extension direction so as to superpose, in use, on said flat surface (100) of the piece of furniture (101); said cross-member (1) having a front face (2) and a rear face (3) opposite the front face; said rear face (3) extending substantially along a rest plane destined to superpose on said flat surface (100) of the piece of furniture (101);
- connection means (4) of the cross-member (1) to the piece of furniture (101) at least partly arranged at the rear face (3) of the cross-member (1); the part of said connection means (4) arranged at the rear face (3) of the cross-member (1) is arranged in a recessed position in the rear face (3) with respect to the rest plane, in such a way that in use said part of said connection means (4) is arranged externally to the flat surface (100) of the piece of furniture (101) according to a direction going from the piece of furniture (101) towards the cross-member (1);
**characterised in that** said cross-member (1) has a section profile, according to a direction orthogonal to the longitudinal extension direction of the cross-member (1), defining a recess (8) at the rear face (3) in which said part of the connection means (4) is arranged and a substantially curved shaping (9) on said front face (2); said section profile having one or more longitudinal edge portions (6, 7) according to a direction orthogonal to the longitudinal extension direction of the cross-member (1), wherein at least one of said edge portions (6, 7) is flat at said front face (2) and less projecting with respect to said curved shaping (9), and is configured to rest on the flat frontal surface (100) of the piece of furniture (101).

2. The system according to claim 1, **characterised in that** said section profile has two edge portions (6), (7) between which said recess (8) is arranged, wherein said edge portions (6), (7) lie on a same lying plane at the rear face (3).

3. The system according to claim 2 **characterised in that** both of said edge portions (6, 7) are flat and are configured to rest on the flat frontal surface (100) of the piece of furniture (101).

4. The system according to any one of the preceding claims, **characterised in that** part of said connection means (4) arranged at the rear face (3) of the cross-member (1) comprises a longitudinal seat (5) extending along said longitudinal extension direction

5. The system according to any one of the preceding claims **characterised in that** said recess (8) defines a substantially curved shaping (9) on said front face (2).

6. The system according to any one of the preceding claims, **characterised in that** said front face of the cross-member (1) has an extension that is orthogonal to the substantially planar longitudinal extension direction.

7. The system according to any one of the preceding claims when dependent on claim 4, **characterised in that** said connection means (4) comprise a sliding element (10) configured to insert inside the longitudinal seat (5) and a connecting element (13) configured to connect to the piece of furniture (101).

8. The system according to claim 7, **characterised in that** said sliding element (10) comprises a bracket (11) having a longitudinal extension that is smaller with respect to the width of an opening of the seat (5) so as to be able to fit in the seat (5) through the opening itself to define a first operating condition of the sliding element (10); said bracket (11) having its transversal extension that is greater than the width of the opening of the seat (5) so that by rotating the sliding element (10) about itself starting from the first operating condition, it switches to a second operating condition in which exit of the bracket (11) from said seat (5) is prevented.

9. The system according to one of claims 7 or 8, wherein said connecting element (13) is L-shaped and comprises a first portion (13a) connected to the sliding element (10) and a second portion (13b) connectable to a wall (102) of the piece of furniture (101).

10. The system according to claim 9, wherein said connecting element (13) and said sliding element (10) are made as one-piece.

11. A piece of furniture (101) comprising:
a plurality of walls (102) defining a flat surface (100) at the front thickness thereof;
a covering system according to any one of the preceding claims, wherein said cross-member (1) is fixed transversally with respect to the front thickness of the walls (102) at a part of said flat surface (100) which does not have undercuts and/or worked parts of the walls (102) of the piece of furniture (101).

12. The piece of furniture (101) according to claim 11, **characterised in that** it comprises one or more closing doors at least partly superposed on the front face (2) of the cross-member (1).

13. The piece of furniture (101) according to one of claims 11 or 12, wherein said walls (102) are vertically arranged and are horizontally spaced from one another; said cross-member (1) extending horizontally through a plurality of said walls (102).

14. A fixing method of a covering system realised according to any one of claims from 1 to 10, comprising the following operating steps:
- identifying the fixing position of the cross-member (1) to the piece of furniture (101) according to the configuration of the piece of furniture (101);
- positioning the connection means (4) on the rear face (3) of the cross-member (1) in a position corresponding to at least one of the walls (102) of the piece of furniture (101) to which said cross-member (1) is to be fixed;
- resting the cross-member (1) on a portion of said flat surface (100) defined by the walls (102) of the piece of furniture (101) which does not have undercuts and/or worked parts; and
- fixing the connection means (4) to one or more walls (102) of the piece of furniture (101).
